# EUROPEAN PATENT APPLICATION

(11) **EP 0 940 416 A1**
(43) Date of publication of application: **08.09.1999**
(21) Application number: 99104374.6
(22) Date of filing: 04.03.1999
(51) Int. Cl.: C08G 18/42

(54) **Fire-resistant polyurethane and use thereof**

(30) Priority: 04.03.1998 IT BO980125
(71) Applicant: Navarra, Renzo, I-47023 Cesena (Forli) (IT)
(72) Inventor: Ziliani Bernardi, Dolores, 31033 Castelfranco Veneto (Treviso) (IT)
(74) Representative: Negrini, Elena

(57) **Abstract**

A fire resistant polyurethane resulting from the reaction between a polyol component and an isocyanic component, is composed by the following elements:
- polyester polyol with aromatic base (dimethylterephthalate), with functionality 2-3, with proportion varying between 50 and 100 weight parts (wp), preferably ranging from 70 to 100wp;
- polyether polyol, with proportion ranging from 0 to 30wp;
- water, in quantity between 0,5 and 2wp, preferably from 0,5 to 1,5wp;
- at least surface-active agent, in quantity between 0,5 and 2,5wp;
- a first catalyst with tertiary aliphatic amine base, with a proportion varying between 0 and 1wp, preferably 0,2-0,5wp;
- a second catalyst with tertiary aliphatic amine base, with proportion between 0 and 2wp, preferably varying from 1 to 1,5wp;
- an expander such as the dichlorofluoroethane (141b) or tetrafluoroethane (134a) or clorodifluoromethane (HFC22) or n-pentane or cyclopentane, in quantity varying from 0 to 25wp;
- an isocyanate of diphenylmethanediisocyanate (MDI) type and/or toluenediisocyanate (TDI), their derivatives, mixtures thereof and products deriving from their reaction with polyols (prepolymers).

The reaction between the polyol component and the isocyanic component made the polyurethane.

The quantity in weight of the isocyanic component that must react with 100wp of the whole polyol component is comprised between 120 and 250wp, preferably between 170 and 220wp.

## Description

The present invention concerns the production of polyurethane resin.

In particular, this invention relates to the production of a fire-resistant polyurethane usable as heat insulator in apparatus used in food cells, in cold and building industry.

It is well known that the polyurethane resin, especially of rigid type, is obtained by the reaction between polyether or polyester poliols, (materials with OH terminal groups) and diphenylmethanediisocyanate (MDI) and/or toluenediisocyanate (TDI), mixture thereof and/or prepolymer (materials with NCO terminal groups) and other known additive.

The rigid low density closed cell polyurethane so obtained has insulating and mechanical features of particular importance, such as for instance the lowest coefficient of thermal conductivity compared with the other insulators used till now for the same applications, over that a high compression resistance, a good resistance to the atmospheric and chemical agents and a dimensional stability up to approximately 100°C.

Moreover, since polyurethane is easily injected into every die or interspace, it is an insulating material with wide usage versatility, as widely described in the related literature.

Accordingly the rigid low density polyurethane is widely used as heat insulator, for instance in the domestic and industrial refrigerators, in the water heaters, in metal plate insulating panels, used in the cold industry, in the insulating panels with flexible support, used for building applications and in the panels with support of plastic reinforced by fiber glass, used in the alimentary cells.

The main drawback of such a polyurethane consists is that it has a low fire-resistance level.

This limits the use of this insulating material in the steel structured civil buildings, for instance fire barrier doors and walls and generally in the applications requiring the observance of safety standards for the protection against fire.

For these applications, panels, having metallic plates between which an insulator core is interposed, are used while this core is generally constituted by rock wool or by a cement mixture added to polyurethane or by inorganic materials, which have a lower insulating features than polyurethane and furthermore they need a complex transformation process.

However these panels respect the safety standards of the protection against fire, particularly in conformity with the REI classification, according to the Italian Internal Ministry circular No. 91 dated September 14, 1961.

Halogen compounds are added to improve the polyurethane formulation, in such a way to get the so-called "self extinguishing products".

The disadvantage introduced by this solution is that it is only improved the fire behavior of such insulating material but not its fire resistance.

As a consequence the characteristics reached by these polyurethane-based products do not allow their use in applications, such as, for instance, the fire barrier doors and walls.

The main object of the present invention is therefore to propose one or more compositions suitable of obtaining a polyurethane foam having close cell structure, acting as insulating material, so as that the manufactures thereof have fire-resistance features observing the safety standards related to the fire protection, particularly in conformity with the REI classification.

Other object is to propose an insulating polyurethane material suitable to be used in the steel structured buildings for civil use, for instance fire barrier doors and walls , and generally in the applications requiring the respect of suitable safety standards for the protection against fire.

Further object of the present invention is to propose an insulating polyurethane material of simple realisation and cheap production cost.

Said objects are obtained in accordance with the content of the claims.

Such insulating material is made by producing the reaction between a polyol component and an isocyanic component.

The polyol component includes:
- polyester polyol with aromatic base (dimethyl terephthalate DMT), with functionality 2-3 and proportion varying between 50 and 100 weight parts (wp), preferably ranging from 70 to 100 wp;
- polyether polyol, in varying proportion from 0 to 30 wp;
- water, in quantity between 0,5 and 2 wp, preferably from 0,5 to 1,5 wp;
- a surface-active agent, in quantity between 0,5 and 2,5 wp;
- a first catalyst with amine tertiary aliphatic base, with a proportion varying between 0 and 1 wp, preferably 0,2-0,5 wp;
- a second catalyst with amine tertiary aliphatic base, with proportion between 0 and 2 wp, preferably varying from 1 to 1,5 wp;
- an expander such as the dichlorofluoroethane (141 b) or tetrafluoroethane (134 a) or clorodifluoromethane (HFC 22) or n-pentane or cyclopentane, in quantity varying from 0 to 25 wp;
- a cross linker (glycol having a functionality from 2 to 4 - diethylenetoluendiamine or a polyoxylalkylamine), in quantity up to 10 wp;
- a self extinguishing agent, preferably halogen based, that can be in powder and /or liquid.

The isocyanic component includes:
- a isocyanate of diphenylmethanediisocyanate (MDI) type and/or toluenediisocyanate (TDI), their derivatives, mixtures thereof and products deriving from their reaction with polyols (prepolymers).

The first catalyst acts in the firt part of the reaction while the second catalyst acts as trimerization element.

It is furthermore possible adding into the polyol component a viscosity depressor (propylencarbonate), in quantity up to 5 wp, designed to improve the mixture between the elements compounding the basic formulation; a pH regulator, designed to maintain basic the mixture obtained from this formulation.

To the basic formulation of this insulating material it can be moreover added: a dye pulp, to identify through coloration, the insulating material and consequently the panel produced therewith; an antimicrobial agent, destined to prevent microbe and/or mold formation; an adhesive agent, destined to improve the adhesion between the insulating polyurethanic foam material and the rigid supports of the panel.

A foam is obtained from the reaction between the polyol component and the isocyanic component, this foam is used as insulating material between two metallic plates constituting a panel, commonly known as "sandwich".

The panels including the insulating material object of this invention can be obtained through known production methods in "continuous" or "discontinuous" way, widely described in literature, and they can in any case reach a fire resistance up to REI 180, that is a resistance to the fire up to 180 minutes, using the Italian rules for the resistance tests.

Therefore it is clear the advantage offered by using panels and manufactures using this fire resistant polyurethane in insulated environments but also in the realisation of civil use place, including the fire barrier doors and walls.

Following an example is described in which several formulations of the insulating material based on fire-resistant polyurethane have been realized, together with the fire resistance tests of the so obtained manufacture.

### EXAMPLE

### A) Preparation of different samples of insulating material according to different formulations.

The formulations of the various panels of insulating material are reported in the following tables and are countersigned by the letters from A to Z:

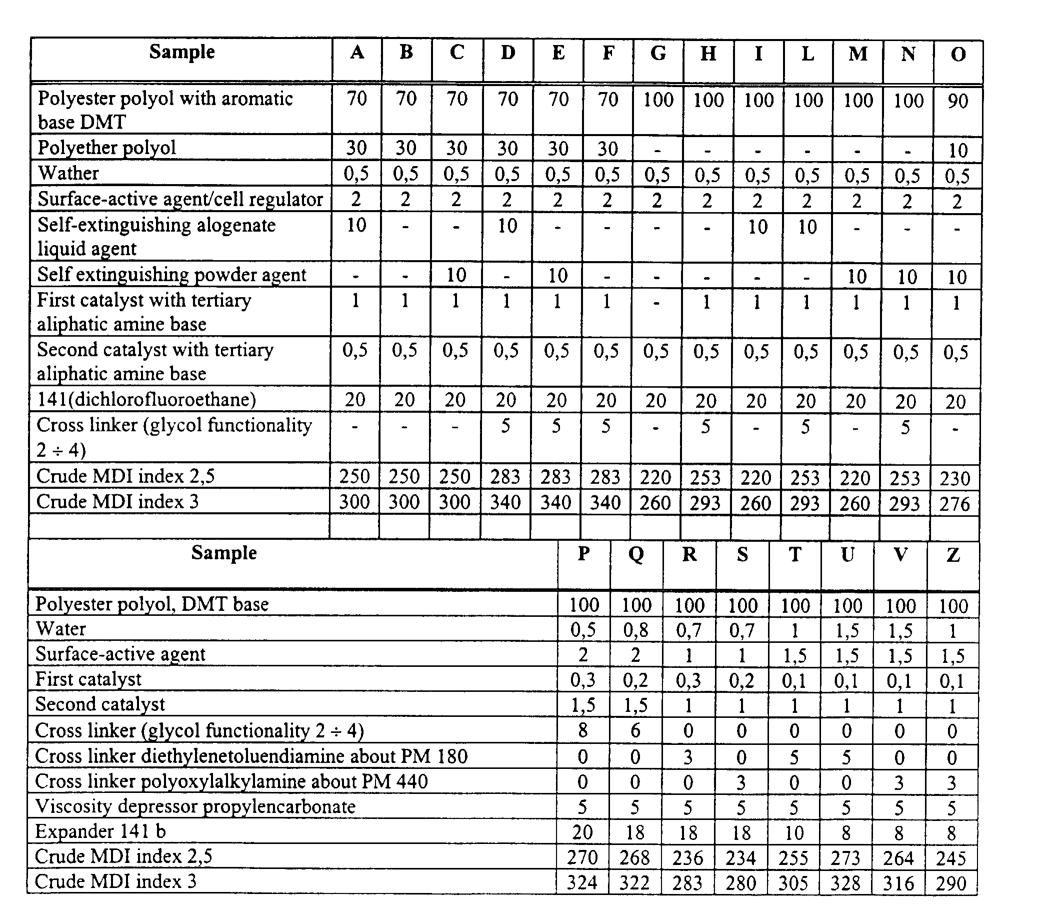

The following optional products, have been inserted in the base formulations:
- a viscosity depressor, to improve the mixture of different products;
- a pH regulator, to maintain the basic grade environment;
- a dye pulp, to allow the identification of the polyurethane;
- an anti-microbial agent, for particular applications in which an antibacterial and/or a fungicide agent is required;
- an adhesive agent, designed to improve the adhesion between the polyurethane foam and the rigid supports of the panels.

The reaction times and free expanding density have been preliminarily fixed and verified with manual mixing in laboratory: cream time = 25"±5, gel time = 100"±10" and density between 40 and 70 Kg/cubic metre, preferably 60±5 Kg/cubic metre.

It must be underlined that the use of halogen agents do not influence the test result related to the fire-resistance, but make worse the smoke composition in terms of quantity, colour, opacity and intensity, nevertheless other self extinguish halogen free agents, can improve the smoke composition.

### B) Fire resistance test

The samples of insulating material panels laboratory made are constituted by:
a) external coverings made with steel prepainted fretted plate, 0,5 mm thickness, fretting pitch of 115 mm and fretting depth of 2,0 mm;
b) internal isolation made with a layer of expanded polyurethane, composed as described in the present invention, with density 60 ± 5 Kg/cubic meter and thickness of: 60 mm, 90 mm, 120 mm, 180 mm.
Every panel of 680 mm length and 780mm height has been inserted inside peripheral frame made with a "C" shaped steel plate of 0,8 mm thickness.

The test carried out in laboratory was made using an electric oven, with 6 KW power with a volume capability of 160 cubic decimetre and with an opening of 52x61 cm.

In front of the oven opening was built a refractory brick wall with a 40x40 cm hole on which the panel is fixed, made as above described. On the external surface (not interested by the fire) of the panel under test, a thermocouple has been applied, placed in proximity of the centre opening zone of the oven.

The panels have been tested following this coupling method:
- thickness 60 mm = test for REI 60;
- thickness 90 mm = test for REI 90;
- thickness 120 mm = test for REI 120;
- thickness 180 mm = test for REI 180.

It must be underlined that a manifactured product is classified 60 - 90 - 120 - 180 REI, when, after the above described test, on the external surface the temperatures does not reach 180°C respectively after 60 - 90 -120 -180 minutes.

Once prepared the measuring and control instruments, the oven is turned on for a preheating time of 1 hour during which the oven reaches 600°C.

At this moment the test starts and the time duration is triggered. The oven heating curve, time function, from the test beginning, is shown in the following diagram:

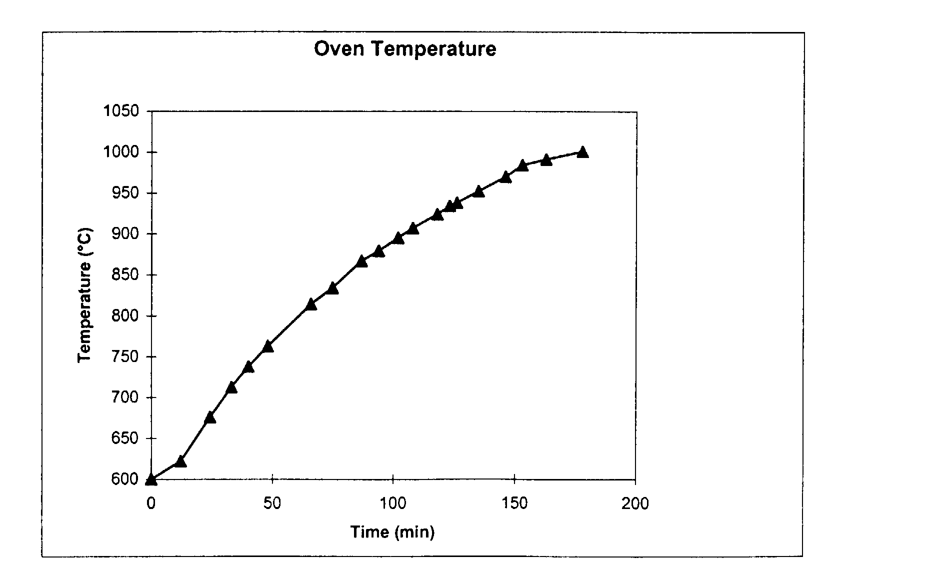

The temperature trends on the panel surface outside the oven, in function of the test time, for the fire-resistant polyurethane sampled panels which have given the most meaningful results are shown in the following graphics:

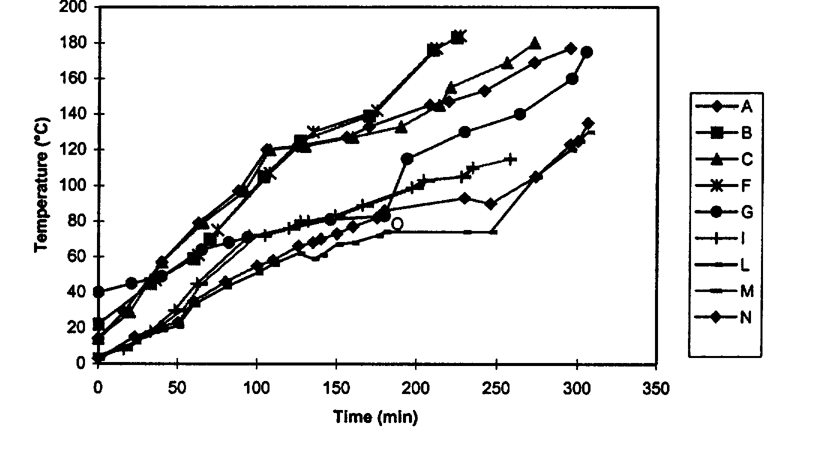

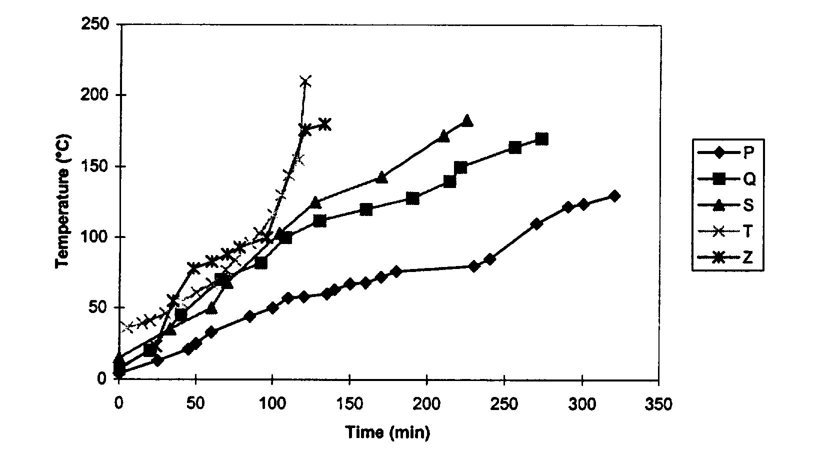

From the previous graphics it can clearly be seen that all the sampled panels were resistant to fire and precisely those made with the different formulations from A to O were resistant to fire so obtaining a classification REI 60, REI 90, REI 120 and REI 180 in relationship with the thickness of the same panel.

The same considerations are valid for the different formulations from P to Z, with a better performance for those in which the percentage of aromatic compounds is higher.

The main advantage of the present invention is therefore to furnish a suitable formulation for obtaining an insulating material made of highly fire-resistant polyurethane.

Other advantage is to furnish a suitable formulation for obtaining an insulating material made of polyurethane used in buildings with steel structure designed to civil use, for instance fire barrier doors, and in general in the applications requiring severe safety standards for the fire protection.

Further advantage of the present invention is to furnish a suitable formulation for obtaining an insulating material in polyurethane of simple realisation and installation.

## Claims

1. Fire-resistant polyurethane material made with a polyol component and an isocyanic component characterized in that said polyol component constitued by 100 wp, includes:
- polyester polyol with aromatic base, with functionality 2-3, in proportion varying between 50 and 100 wp;
- polyether polyol, with a proportion ranging from 0 to 30 wp;
- water, in quantity between 0,5 and 2 wp;
- at least a surface active agent, in quantity between 0,5 and 2,5 wp;
- at least a first catalyst with tertiary aliphatic amine base, with a proportion varying between 0 and 1 wp;
- at least a second catalyst with tertiary aliphatic amine base, with a proportion ranging between 0 and 2 wp;
and that said isocyanic component, constituted with 120-250 wp, includes an isocyanate of diphenylmethanediisocyanate type or toluenediisocyanate type, or derivatives, or mixtures thereof.

2. Polyurethane according to claim 1, characterized in that further includes in said polyol component, at least an expander with a base of dichlorofluoroethane, or tetrafluoroethane, or clorodifluoromethane, or n-pentane, or cyclopenthane, with a proportion varying from 0 to 25 wp.

3. Polyurethane according to claim 1, characterized in that said polyester polyol is in proportion varying from 70 to 100 wp.

4. Polyurethane according to claim 1, characterized in that said water is in proportion varying from 0,5 to 1,5 wp.

5. Polyurethane according to claim 1, characterized in that said first catalyst is in proportion varying from 0,2 to 0,5 wp.

6. Polyurethane according to claim 1, characterized in that said second catalyst is in proportion varying from 1 to 1,5 wp.

7. Polyurethane according to claim 1, characterized in that further includes, in said polyol component, at least a cross linker with a base of glycol or diethylenetoluendiamine or polyoxylalkylamine having a functionality from 2 to 4, in quantity up to 10 wp.

8. Polyurethane according to claim 1, characterized in that further includes, in said polyol component, at least a self extinguishing agent, preferably halogen based.

9. Polyurethane according to claim 1, characterized in that further includes, at least a viscosity depressor in quantity up to 5 wp.

10. Polyurethane according to claim 1, characterized in that further includes at least a pH regulator.

11. Polyurethane according to claim 1, characterized in that includes at least a colouring pulp.

12. Polyurethane according to claim 1, characterized in that includes at least a antimicrobial agent.

13. Composite panel using the polyurethane according to the preceding claims characterized in that includes at least two rigid supports between which said polyurethane is interposed.

14. Panel according to claim 13, characterized in that said polyurethane is interposed as foam.

15. Panel according to claim 13, characterized in that said rigid supports, are sheet or plate type, having smooth, ribbed or fretted surfaces.

16. Panel according to the claim 15, characterized in that said sheets are made with steel prepainted or inox plates.

17. Panel according to claim 15, characterized in that said plates are made with plastic renforced by fiber glass, copper, aluminium.

18. Panel according to claim 13, characterized in that said polyurethane further includes at least an adhesive agent.

19. Panel according to claim 13, characterized in that it is used in carrying out buildings with steel structure for civil use, fire barrier doors and walls, false ceiling, fire barrier compartments, refrigerator cells, curtain walls.
